# EUROPEAN PATENT APPLICATION

(11) **EP 0 692 792 A1**
(43) Date of publication of application: **17.01.1996**
(21) Application number: 95304465.8
(22) Date of filing: 26.06.1995
(51) Int. Cl.: G21C 3/20

(54) **Nuclear fuel cladding**

(30) Priority: 13.07.1994 US 274518
(71) Applicant: GENERAL ELECTRIC COMPANY, Schenectady, NY 12345 (US)
(72) Inventor: Anthony, Thomas Richard, Niskayuna, New York 12309-2514 (US)
(74) Representative: Greenwood, John David

(57) **Abstract**

Gold-coated zirconium and zirconium alloy reactor components and specifically cladding tubes (14) are provided. The gold coating (27) prevents hydrogen and hydrogen-bearing chemical species from finding their way into the zirconium or zirconium alloy. Gold coatings on the interior of cladding tubes (21) have an average thickness sufficiently great to prevent hydrogen or hydrogen-bearing species from penetrating through the coating and sufficiently thin to pass a significant neutron flux from fissionable fuel. Such cladding tubes include an outer circumferential zirconium alloy substrate (21), a zirconium barrier layer (22) metallurgly bonded to the inter surface, and the gold coating (27) on the inner surface of the zirconium barrier layer.

## Description

This invention relates to fuel components for use in nuclear reactors.

Nuclear reactors generally use zirconium and zirconium-based alloys for components of fuel assemblies in the reactor core, e.g. fuel cladding, end plugs, flow channels, and spacers. Zirconium and its alloys, under normal circumstances, are excellent materials for these components because they have low neutron absorption cross sections and, at temperatures below about 350°C, are strong, ductile, extremely stable and relatively nonreactive in the presence of demineralized water or steam. "Zircaloys" are a family of corrosion-resistant zirconium alloy cladding materials. They are composed of 98-99% by weight zirconium, with the balance being tin, iron, chromium, and nickel. "Zircaloy-2" and "Zircaloy-4" are two widely-used alloys for cladding. Zircaloy-2 has on a weight basis about 1.2 to 1.7 percent tin; 0.13-0.20 percent iron; 0.06-0.15 percent chromium and 0.05 to 0.08 percent nickel. Zircaloy-4 has essentially no nickel and about 0.2% iron but is otherwise substantially similar to Zircaloy-2.

During normal reactor service, zirconium-based components can pick up hydrogen resulting from the corrosion of zirconium and zirconium alloys in water or steam environments. The hydrogen then reacts with the zirconium to form zirconium hydride which embrittles the material, thereby establishing conditions for potential damage to the fuel components.

A particularly deleterious form of hydride embrittlement occurs in the interior of a fuel cladding when water enters through a breach in the cladding wall. The initial "primary defect" through which the water enters is not necessarily catastrophic, and the breached cladding can sometimes be used for a period of time. However, the damaged cladding is susceptible to localized hydriding and ensuing "secondary defects". Secondary defects can be much worse than their primary counterparts, potentially allowing release of large amounts of fission products and fuel material from erosion/corrosion of the fuel material.

Secondary defects likely form according to the following sequence of events. When a fuel rod is initially breached, the coolant water enters the tube and instantly flashes to steam. Some of the steam probably reacts to generate hydrogen when it contacts a zirconium liner typically provided on the inner surface of the cladding. Some of the hydrogen so produced is instantly absorbed by the zirconium. The remaining hydrogen is gaseous. If unchecked, both the absorbed and gaseous hydrogen can lead to formation of zirconium hydride. However, the gaseous hydrogen is apparently directly responsible for the potentially catastrophic secondary defects. When the hydrogen gas reaches a critical concentration at which it significantly displaces oxygen in the atmosphere (a condition sometimes referred to as oxygen starvation), large amounts of zirconium hydride will form locally on any bare zirconium (or zirconium alloy) surface such as is provided by a break in the thin oxide layer that normally coats zirconium or zirconium alloy. The resulting massive hydride often appears as a "blister" or "sunburst."

The directly absorbed hydrogen also damages zirconium components. However, it does so by forming brittle zirconium hydride platelets within the base metal matrix. The platelets generally form first on grain boundaries, and then continue to grow with increasing hydrogen content until a continuous hydride phase at the grain boundaries is achieved.

Various approaches have been taken to prevent the formation of zirconium hydride in structural elements for nuclear fuel applications. For example, yttrium and some other rare earth metals, when in intimate contact with zirconium, have been found to act as preferential sinks for hydrogen. A fuel rod design incorporating monolithic layers of yttrium provided as inner liners on a zirconium-based alloy tube, or as an internal cap on an end plug is described in German Auslegeschrift 19 03 009, published on December 16, 1976. Unfortunately, any bare yttrium used in such tubes would likely corrode in the fuel core environment, thus degrading its usefulness in preventing hydride formation.

U.S. Patent No. 4,659,545 (issued to Ferrari on April 21, 1987) describes a similar design in which between 140 percent of a cladding inner surface area is coated with thin film nickel spots. This design supposedly provides multiple hydrogen entry regions (the nickel film spots) so as to distribute the hydrogen more uniformly over the inner surface of the cladding. Unfortunately, this design still allows formation of locally high hydrogen concentrations in the zirconium alloy matrix near the nickel spots. Thus, hydride platelets can still form in the cladding tube, albeit at separated regions.

U.S. Patent Application No. 08/215,451 (Attorney Docket No. 24-NT- 05494/GENEP011, entitled "NUCLEAR FUEL CLADDING WITH HYDROGEN ABSORBING LINER", naming Marlowe as inventor, filed on March 16, 1994, and assigned to the assignee hereof) describes an improved fuel cladding design having a hydrogen-absorbing zirconium-alloy inner liner. The zirconium alloy contains a matrix having a relatively high concentration of a hydrogen absorbing material such as nickel. Thus, hydrogen in a fuel rod is absorbed uniformly over the cladding interior. Although this design represents a significant advance over the prior art, it would still be desirable to have other designs in which hydrogen is prevented from reacting with the zirconium or zirconium alloys in reactor components.

The present invention provides modified zirconium and zirconium alloy reactor fuel components such as cladding tubes having protective gold coatings. The gold coatings protect against the detrimental effects of zirconium hydride formation by effectively preventing hydrogen and hydrogen-bearing chemical species from finding their way into the zirconium or zirconium alloy. When such gold coatings are used to line the interior of cladding tubes, they will preferably have an average thickness sufficiently great to prevent hydrogen or hydrogen bearing species from penetrating through the gold coating and sufficiently thin to pass a significant neutron flux from fissionable fuel. In an especially preferred embodiment, the cladding tube includes an outer circumferential zirconium alloy substrate, a zirconium barrier layer metallurgically bonded to the inner surface of the substrate, and a gold coating disposed on the inner surface of the zirconium barrier layer.

In preferred embodiments, the thickness of the inner circumferential gold coating is between about 0.0001 and 0.01 times the wall thickness of the circumferential substrate. More preferably, the gold coating is about 0.005 times the wall thickness of the circumferential substrate. For a conventional cladding, the gold coating thickness is between about 0.05 and 10 micrometers thick. More preferably, the gold coating is between about 0.5 and 10 micrometers thick, and even more preferably between about 1 and 5 micrometers thick.

In another aspect, the invention provides a method of making a cladding tube having a coating of gold. A preferred method includes the following steps: (1) providing a tube having one or more layers, at least one of which comprises zirconium or a zirconium alloy, each of the layers having inner and outer circumferential surfaces. and (2) forming a coating of gold on at least one of the inner and outer circumferential surfaces of one of said layers. The gold coating may be formed by a variety of methods. An especially preferred method is extruding a gold sleeve together with a zirconium alloy billet (which will form the substrate) and sleeves for any other cladding layers that may be required (e.g., a zirconium barrier layer sleeve). Other suitable methods of forming the gold coating include electroplating, electroless plating, evaporation, and chemical vapor deposition.

These and other features of an exemplary embodiment of the present invention will now be presented in more detail with reference to the accompanying drawings, of which :
FIGURE 1 is a partial cutaway perspective view of a nuclear fuel bundle containing a nuclear fuel rod;
FIGURE 2 is a partial cutaway sectional view of a nuclear fuel bundle showing the interior of a fuel rod;
FIGURE 3 is a cross-sectional view of a cladding tube of this invention; and
FIGURE 4 is a cross-sectional view of a nuclear fuel element having a substrate, a barrier layer, an inner liner, and an inner gold coating in accordance with this invention,

### I. GOLD COATED NUCLEAR FUEL CLADDING STRUCTURES

Hydrogen is completely insoluble in gold. Thus, a thin gold coating provided on the surface of a zirconium or zirconium alloy surface will prevent the ingress of hydrogen and consequent formation of zirconium hydride. In addition, gold is highly malleable and ductile, thus allowing for preparation of thin gold coatings on cladding surfaces. The present invention advantageously employs these properties of gold to provide cladding tubes and other reactor components having increased resistance to the detrimental effects of hydrogen in nuclear reactor environments.

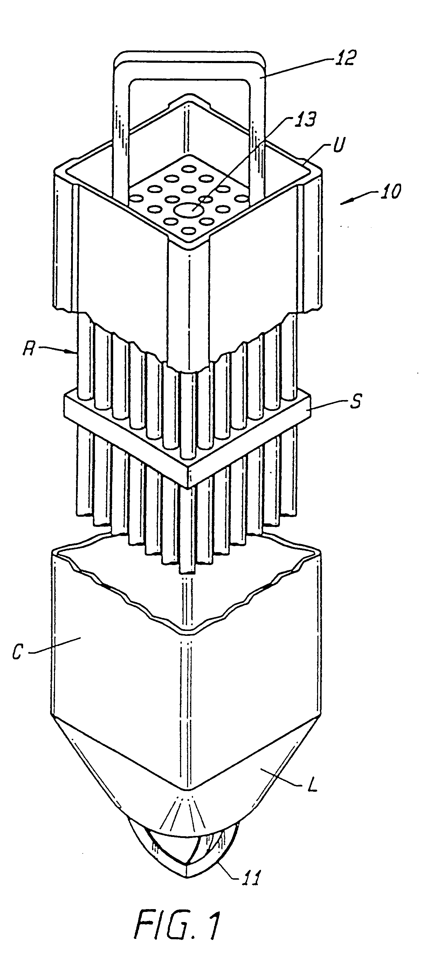

Fig. 1 shows a cutaway sectional view of a nuclear fuel bundle or assembly 10 for a boiling water reactor ("BWR"). The fuel bundle 10 is a discrete unit of fuel containing many individual sealed fuel elements or rods R each containing a cladding tube and nuclear fuel. In addition, the fuel bundle consists of a flow channel C provided at its upper end with an upper lifting bale 12 and at its lower end with a nose piece L and lower lifting bale 11. The upper end of channel C is open at 13 and the lower end of the nose piece is provided with coolant flow openings. The array of fuel elements or rods R is enclosed in channel C and supported therein by means of upper tie plate U and lower tie plate (not shown). Certain of the fuel rods serve to "tie" the tie plates together -- thus frequently being called "tie rods" (not shown). In addition, one or more spacers S may be disposed within the flow channel to hold the fuel elements in alignment with one another and the flow channel. During the in service life of the fuel bundle, the liquid coolant ordinarily enters through the openings in the lower end of the nose piece, passes upwardly around fuel elements R, and discharges at upper outlet 13 in partially vaporized condition.

The bundle shown in Fig. 1 is provided as an example only, and it should be understood that the present invention can also be employed in pressurized water reactors ("PWRs") and "CANDU" reactors among others. Although PWR nuclear fuel bundles are similar in some regards to the BWR fuel bundles, there are some important differences. For example, there are no channels in the PWR fuel bundles. Further, there are more fuel rods -- as many as 17x17 or 289 -- in the bundle array. In most other regards, PWR and BWR bundles are similar. For instance, both have lifting bales and tie plates. CANDU reactors - which are used in some Canadian reactors --have a somewhat different design, employing natural uranium dioxide in horizontally oriented cladding tubes and using heavy water as the moderator.

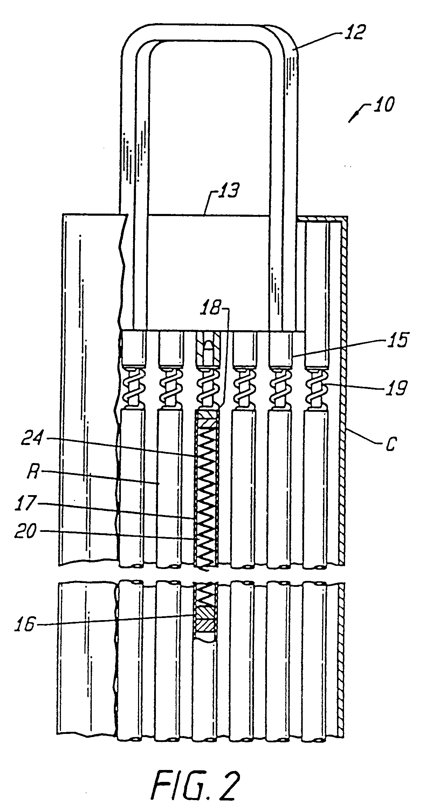

Referring now to Fig. 2, the fuel elements or rods R are sealed at their ends by end plugs 18 welded to the fuel rod container 17, which may include studs 19 to facilitate the mounting of the fuel element in the fuel assembly. The fuel element is designed to provide excellent thermal contact between the fuel rod container 17 and the fuel material core, a minimum of parasitic neutron absorption, and resistance to bowing and vibration which is occasionally caused by flow of coolant at high velocity. The fuel material core is typically a plurality of fuel pellets of fissionable and/or fertile material. The fuel core may have various shapes, such as cylindrical pellets, spheres, or small particles. Various nuclear fuels may be used, including uranium compounds, thorium compounds and mixtures thereof. Preferred fuels include uranium dioxide or a mixture comprising uranium dioxide and plutonium dioxide.

A void space or plenum 20 is provided at one end of the element to permit circumferential expansion of the fuel material 16 and accumulation of gases released by the fuel material. A getter (not shown) can be employed to remove hydrogenous impurities found in the fuel rod after manufacture. A nuclear fuel material retainer 24 in the form of a helical member is positioned within space 20 to provide restraint against axial movement of the pellet column during handling and transportation of the fuel element.

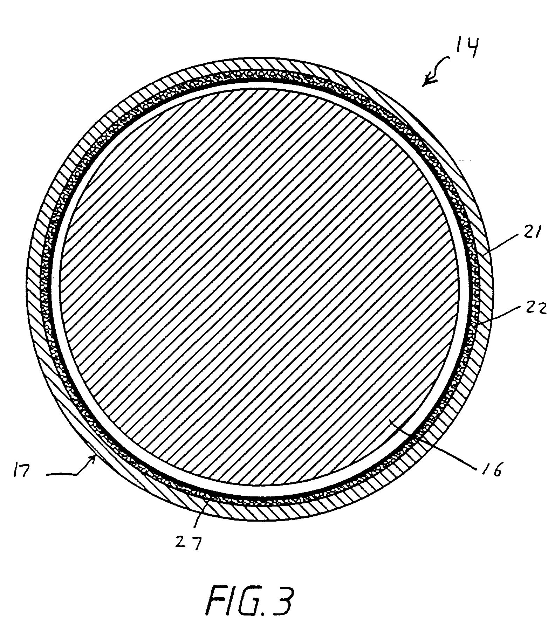

Referring to Fig. 3, a cross-section of a fuel element 14 provided in accordance with this invention is shown. Fuel element 14 includes a fuel rod container 17 surrounding a fuel material core 16. The container 17 is a composite cladding having a structure including a substrate 21, a zirconium barrier 22, each having circumferential inner and outer surfaces. The inner surface of the zirconium barrier layer contains a gold coating or liner 27. The substrate defines an outer circumferential region of a cladding tube, the inner coating defines an inner circumferential region, and the zirconium barrier is located between the substrate and inner coating. The gold inner coating is both corrosion resistant and completely hydrogen impermeable, thereby preventing hydrogen in the tube interior from reaching the zirconium barrier layer or zirconium alloy substrate.

The cladding substrate is preferably made from a zirconium alloy. Most generally, suitable zirconium alloys have (1) corrosion resistance to boiling water reactor ("BWR") and/or pressurized water reactor ("PWR") coolant and (2) sufficient strength and ductility for use as fuel elements. Suitable zirconium alloys for the substrate preferably include at least about 98% zirconium, up to about 0.25% iron, up to about 0.1% nickel, up to about 0.25% chromium, and up to about 1.7% tin (all percents by weight). Other alloying elements may include niobium, bismuth, molybdenum, as well as various other elements used in the art.

In a preferred embodiment of this invention, the substrate is Zircaloy-2 or Zircaloy-4. In other preferred embodiments, "Zirlo" -- a zirconium-based alloy containing about 1% tin, about 1% niobium, and less than about 0.2% iron -- is employed. Other exemplary substrate alloys include zirconium/2.5% niobium, "NSF' alloys (about 1% tin, about 0.2-0.5% iron, about 0.05% nickel, about 0.6-1% niobium, and the balance zirconium), "Valloy" (about 0.1% iron, about 1.2% chromium, and the balance zirconium), other high chromium content alloys, and "Excel" or "Excellite" (about 0.3% niobium, about 0.3 molybdenum, about 1.2 to 1.5% tin, and the balance zirconium). Still other exemplary alloys include various bismuth-containing zirconium alloys such as those described in U.S. Patent No. 4,876,064 issued to Taylor on October 24, 1989. These alloys include, for example, (1) about 0.5 to 2.5 weight percent bismuth, (2) about 0.5 to 2.3 weight percent of a mixture of bismuth and tin plus about 0.5 to 1.0 weight percent of solute which may be niobium, molybdenum, tellurium, or mixtures thereof, or (3) about 0.5 to 2.5 weight percent of a mixture of tin and bismuth plus about 0.3 to 1.0 weight percent tellurium.

In a two-layer cladding, a pure (or dilutely alloyed) zirconium barrier layer is metallurgically bonded to the inner surface of a Zircaloy tube (the substrate). The substrate provides the strength necessary to withstand the mechanical stresses induced in a nuclear reactor. The barrier layer provides the compliance necessary to combat the detrimental effects of a phenomenon known as pellet-cladding interaction. Pellet-cladding interaction is caused by the interactions between the nuclear fuel, the cladding, and the fission products produced during the nuclear reaction. It has been found that this undesirable effect is due to localized mechanical stresses on the fuel cladding resulting from differential expansion and friction between the fuel and the cladding in coincidence with corrosive fission product species causing stress corrosion cracking. The pioneering work on zirconium barrier layer cladding is described in U.S. patent Nos. 4,200,492 and 4,372,817 to Armijo and Coffin, U.S. patent No. 4,610,842 to Vannesjo, and U.S. patent No. 4,894,203 to Adamson, each of which is incorporated herein by reference for all purposes. Barrier layers have been found to effectively prevent damage to the cladding due to interaction with the pellet. In effect, the zirconium barrier deforms plastically to relieve pellet-induced stresses in the fuel element during swelling. It also inhibits stress corrosion cracking and protects the cladding from contact and reaction with impurities and fission products.

The gold inner layer or coating is preferably sufficiently thick to prevent the transport of hydrogen or other hydrogen-bearing chemical species to the zirconium barrier layer. As used herein, the term hydrogen-bearing specie refers to chemical species containing a hydrogen atom and including such compounds as water, hydroxyl ions (OH), and metal hydrides. Gold coatings will also block transport of some non-hydrogenous fission products such as nitrogen, oxygen, the noble gases, and, at low to moderate concentrations, the halogens F, Cl, Br, I and At.

Very thin layers of gold -- as thin as about 100 angstroms -- will prevent transport of hydrogen-bearing species. Preferably, however, the gold coatings used in the cladding of this invention will preferably be somewhat thicker. This reduces their susceptibility to tearing and punctures during handling steps such as fuel loading. Of course, if the gold layer is provided at a location where it is not susceptible to tearing or abrasion (e.g., between Zircaloy substrate and a zirconium barrier layer), the lower limit of gold thickness (e.g., about 100 angstroms) will be sufficient.

While the gold coatings should be thick enough to block transport of hydrogen-bearing species and resist tears, they should also be thin enough to allow penetration of thermal neutrons. The neutron cross section of gold is about 99 barns while that of zirconium is about 0.3 to 0.4 barns. Thus, the optimal thickness of the gold coating will be based on considerations of transparency to thermal neutrons. To this end, the gold coating should be sufficiently thin so that it does not absorb significantly more thermal neutrons than the zirconium-based cladding wall. Therefore, it is generally desirable for the gold coating to be between about 0.0001 and 0.01 times the thickness of the normal cladding. More preferably, the gold coating thickness is somewhat near 0.005 times the normal cladding thickness. In a typical cladding tube, the zirconium alloy substrate is about 750 micrometers thick and the zirconium barrier layer is about 75 micrometers thick. For such cladding, the gold coating should be between about 0.05 and 10 micrometers thick. More preferably, the gold coating should be between about 0.5 and 10 micrometers thick, and even more preferably between about 1 and 5 micrometers thick.

In another embodiment, the present invention provides a gold coated three-layer cladding including a substrate, a barrier, and, in addition, an inner liner. The substrate and the barrier layer may take the same form as described above. The inner liner matrix is preferably Zircaloy or another zirconium alloy. As explained in copending U.S. patent application 08/092,188 entitled INNER LINERS FOR FUEL CLADDING HAVING ZIRCONIUM BARRIER LAYERS, filed on July 14, 1993, and incorporated herein by reference for all purposes, the inner liner protects the zirconium barrier layer from oxidation should water enter the cladding tube interior.

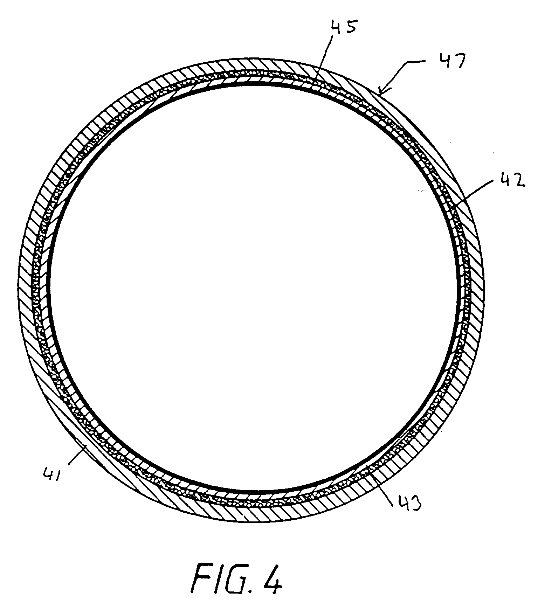

Referring now to Fig. 4, an alternative embodiment of the present invention is shown. The structure 47 includes a gold coating 45 on a three-layer fuel cladding including a substrate 41, a zirconium barrier 42, and an inner layer or liner 43. The substrate forms the outer circumferential region of a cladding tube, the inner liner forms an inner circumferential region, and the zirconium barrier is located between the substrate and inner liner. Preferably, the inner liner 43 is corrosion resistant and thereby protects the zirconium barrier from rapid oxidation should the fuel element interior come in contact with steam. One potential problem associated with two layer cladding (having a substrate and barrier layer) is rapid corrosion of the zirconium barrier layer when water or steam enters the cladding tube through a primary defect in the cladding wall. Thus, the inner liner should be made from a layer on a highly corrosion resistant material such as a zirconium alloy (e.g., a modified Zircaloy). The gold coating 45 protects the inner liner 43 from hydrogen bearing species.

Although the gold coating is preferably located on the inner surface of the cladding, it can also provide protection at other locations in the cladding. For example, the gold coating may be located on the outer surface of the substrate (i.e., coating the exterior circumferential surface of the substrate). This protects the cladding from hydride damage due to hydrogen-bearing species in the moderator or other media contacting the cladding exterior. Further, the gold coating may located within the cladding wall, between the substrate and the zirconium barrier layer of the cladding. This arrangement would still protect the substrate (the principal structural member of the fuel element) from hydride damage resulting from hydrogen-bearing species originating in the fuel element interior. Alternatively, in cladding structures having an inner liner, the gold coating could be located between either (1) the inner liner and the zirconium barrier layer, or (2) the zirconium barrier layer and the substrate. Cladding having the gold coating disposed as described within the cladding wall (as opposed to the cladding interior or exterior) is less likely to tear or puncture in response to handling. Multiple layers of gold can be used in these same locations with the proviso that the sum of the thicknesses of these multiple layers is less than the thickness limitation specified previously. For example, a cladding tube may include a first 1 micrometer thick gold layer provided between the substrate and barrier layer, and a second 1 micrometer thick gold layer provided between the zirconium layer and the inner liner.

### II. MANUFACTURE OF THE TUBING

Various methods may be employed to prepare the gold coated cladding tubes described above. In a preferred embodiment, the gold coating is initially provided as a sleeve that is bonded with other components of the cladding. In such process, the substrate is initially prepared from a beta quenched ingot of suitable zirconium alloy such as Zircaloy-2 or Zircaloy4. The ingot is machined to form a hollow billet which is then bonded with the gold sleeve to form a tubeshell. Because gold is very ductile and malleable down to room temperatures, there is no low temperature limit on the bonding step arising from the use of gold as a barrier layer. Rather, low temperatures are favored when gold is used as a barrier layer to prevent interdiffusion of gold and zirconium or the formation of excessive amounts Zr Au₃ intermetallic. Preferably, the bonding step involves coextrusion of the zirconium alloy billet with the gold sleeve at temperatures of less than about 1063 °C. The extruded tubeshell is then reduced to a final tubing size by a series of cold tube reduction steps (e.g. pilgering steps), each followed by an annealing step at temperatures of up to 650°C. The final reduction step is followed by a final annealing at a temperature selected to give either completely recrystallized final tubing or partially recrystallized tubing, depending on the desired mechanical properties and the application of the tubing.

To form a multi-layer cladding according to the present invention, a zirconium alloy billet is prepared as above and then bonded (preferably by coextrusion) with a zirconium sleeve and a gold sleeve. If a three-layer cladding is to be formed, a zirconium alloy inner sleeve is also includes in the bonding step(s). Details of suitable processes for forming three layer structures having inner liners, zirconium barrier layers, and substrates can be found in U.S. Patent Application No. 08/091,672 filed on July 14, 1993, naming Armijo, Rosenbaum, and Williams as inventors, entitled METHOD FOR MAKING FUEL CLADDING HAVING ZIRCONIUM BARRIER LAYERS AND INNER LINERS, assigned to the assignee hereof, and incorporated herein by reference for all purposes.

It should be noted that the various cladding components can be coextruded in separate steps. For example, the substrate and zirconium barrier layer can be coextruded in a first step followed by coextrusion of the resulting structure with a gold sleeve in a second step. It should also be noted that at least some of the cladding components can be bonded to one another by processes other than extrusion. Such processes include, by way of example, hot isostatic pressing, explosive bonding, and diffusion annealing.

In an alternative embodiment, the gold is provided as thin leaves which are burnished onto the cladding tube interior surface. The leaves are wrapped on a dow of Teflon or other suitable material and then inserted into the tube interior on the dow. The dow is subsequently rolled inside the cladding tube causing the gold leaves to preferentially adhere to the cladding tube interior.

In another embodiment, the gold coating is applied to the zirconium or zirconium alloy surface of the cladding tube by a conventional electrochemical or an electroless chemical process. For example, the gold can be electroplated onto the inner surface of a cladding tube prepared by conventional processing. One suitable electroplating process involves providing a gold chloride (AuCl₃) aqueous solution in the cladding tube interior. The gold ions in the salt solution are then plated out on the cladding tube interior surface by holding the cladding tube at a cathodic potential. Various suitable anodes can be used. Preferably, the anode is a gold wire held axially in the cladding interior and maintained at an anodic potential. Vendors of suitable products for gold electroplating include Norbert Plating Company, 340-T N. Ashland Ave., Chicago, III., 60607; Acteron Corporation, 851 Shasta Street, Redwood City, CA 94063; American Electro Products, 1360 Thomaston Avenue, Waterbury, Conn., 06704; and International Technical Associates, 2281 Calle de Luna, Santa Clara, CA, 95054. Suitable process conditions for gold plating are provided in various well-known references such as L. I. Maissel & R. Glang, Handbook of Thin Film Technology, McGraw Hill, NY, pages 5-9 (1970) which is incorporated herein by reference for all purposes.

Suitable solutions for electroless gold plating are provided by Epner Technology Inc., 25 Division Place, Brooklyn, NY 11222; MacDermid Inc., Waterbury Conn. 06704; Acteron Corporation, 851 Shasta Street, Redwood City, CA 94063; and International Technical Associates, 2281 Calle de Luna, Santa Clara, CA, 95054. Such solutions may include, for example, a few parts per billion of a palladium salt (which acts as a catalyst) together with AuCl₃ and organic compounds which will support an organic addition reaction. Further details of suitable electroless gold plating processes are found in the Maissel and Glang handbook previously incorporated by reference.

In another embodiment, gold is evaporated onto the cladding tube interior surface. In this embodiment, a tungsten wire coated with gold is inserted into an evacuated cladding tube interior. Sufficient current is then passed through the tungsten causing the temperature of the wire to rise to approximately 1200° C. At this temperature the vapor pressure of gold is sufficiently high that it evaporates and deposits on the relatively cool zirconium inner surface to form a gold coating of thickness suitable for this invention. Again, additional details of this process may be found in the Maissel and Glang handbook previously incorporated by reference.

In still another embodiment, the gold coating is formed by chemical vapor deposition. Because cladding tubes have long thin profiles (e.g., 5 meters long by one centimeter), conventional chemical vapor deposition processes may require some modification to provide a sufficiently uniform gold coating. One suitable method involves providing a gold wire along the cladding interior axis and filling the interior with chlorine gas. The gold wire is then heated to approximately 900-1000° C by passing current through the wire. The cladding tube interior is held at approximately 700° C. Under these conditions, the chlorine gas reacts with the gold wire to form gaseous (AuCl)₂ which is stable at about 900° C. The gaseous (AuCl)₂ so formed diffuses to the cooler cladding wall where it is no longer stable (because of the lower temperature) and decomposes to release gold metal and chlorine gas. The chlorine gas then diffuses back to the hotter gold wire where it reacts with the solid gold to form more (AuCl)₂. Ultimately, a uniform gold coating of sufficient thickness for this invention is formed. See for example, "Chemical Transport Reactions," H. Schafer, Academic Press NY, p. 39 (1964) which is incorporated herein by reference for all purposes.

Although the foregoing invention has been described in some detail for purposes of clarity of understanding, it will be apparent that certain changes and modifications may be practiced. For instance, although the specification has described gold coated cladding tubes, the gold coating may be applied to other nuclear reactor components susceptible to hydrogen damage as well. For example, fuel element end plugs, spacers, tie rods, tie plates, flow channels, water rods, and control tubes may also be gold coated in accordance with this invention. In addition, the reader will understand that the gold used herein can be used in forms other than pure unalloyed gold. For example, the cladding tubes here taught may be coated with gold alloys and their equivalents in which hydrogen and hydrogen bearing species are substantially or completely insoluble. That is, the present invention, in its broadest aspect, envisages a zirconium alloy nuclear reactor component having a coating which is substantially insoluble to hydrogen and hydrogen bearing species, the coating being sufficiently thin to pass a significant neutron flux from fissionable fuel.

## Claims

1. A cladding tube having a gold coating for resisting hydrogen induced damage to the cladding tube, the cladding tube comprising:
a zirconium alloy circumferential substrate having inner and outer circumferential surfaces; and
a circumferential gold coating, said gold coating having an average thickness sufficient to prevent hydrogen or hydrogen bearing species from penetrating through the gold coating and sufficiently thin to permit a significant neutron flux from fissionable fuel.

2. The cladding tube of claim 1 further comprising a zirconium barrier layer having an inner circumferential surface and being metallurgically bonded to the inner circumferential surface of said circumferential substrate.

3. The cladding tube of claim 2 wherein the gold coating is disposed on the inner surface of said zirconium barrier layer.

4. The cladding tube of claim 1 wherein the average thickness of said inner circumferential gold coating is between about 0.0001 and 0.01 times the wall thickness of the circumferential substrate.

5. The cladding tube of claim 1 wherein the average thickness of said inner circumferential gold coating is between about 0.5 and 10 micrometers.

6. A method of making a cladding tube having a coating of gold for resisting hydrogen induced damage to the cladding tube, the method comprising the following steps:
providing a tube having one or more layers, at least one of which comprises zirconium or a zirconium alloy, each of the layers having inner and outer circumferential surfaces; and
forming a coating of gold on at least one of the inner and outer circumferential surfaces of one of said layers.

7. The method of claim 6 wherein the step of forming a coating of gold on a surface of said one or more layers includes a step of forming a gold coating on the inner circumferential surface of an inner-most layer of said tube.

8. The method of claim 6 wherein the step of forming a coating of gold comprises metallurgicaily bonding a gold sleeve to at least one of the inner or outer circumferential surfaces of the layers of said tube.

9. The method of claim 8 wherein the metallurgical bond is formed by coextruding the gold sleeve and at least one of said layers of said tube.

10. The method of claim 6 wherein the step of forming a coating of gold comprises electroplating a coating of gold on at least one of the inner or outer circumferential surfaces of the layers of said tube.
